Europäisches Patentamt

European Patent Office

Office européen des brevets

(11) Publication number: **0 114 357**
**A2**

(12) # EUROPEAN PATENT APPLICATION

(21) Application number: **83112889.7**

(22) Date of filing: **21.12.83**

(51) Int. Cl.³: **G 06 F 15/16**

(30) Priority: **21.01.83 US 459746**

(43) Date of publication of application:
**01.08.84 Bulletin 84/31**

(84) Designated Contracting States:
**DE FR GB**

(71) Applicant: **International Business Machines Corporation**
**Old Orchard Road**
**Armonk, N.Y. 10504(US)**

(72) Inventor: **Yost, Robert A.**
**7034 Shearwater Drive**
**San Jose California 95120(US)**

(74) Representative: **Lancaster, James Donald**
**IBM United Kingdom Patent Operations Hursley Park**
**Winchester, Hants, S021 2JN(GB)**

(54) **Controlling multiple distributed computations in a multi cpu environnment from a single port.**

(57) Multiple computations distributed over a network of CPUs and their locally accessing terminals are controlled by operator entered commands at a single physical port. These commands create and bind computations, and logical terminals as well as connecting computations or their subordinate processes to the physical port through the logical terminal. This is effectuated by registering all the output events from locally or remotely executed processes in approximate time of occurrence order in a buffer bound to the named logical terminal which buffer is linearly scanned to ascertain the status and progression of the processes within a computation. Remotely or locally executing processes desiring input competitively wait until one is selected. Data is entered through the port and logical terminal and passed to both the process and the buffer. Once completed, the process resigns and a new input requesting process is selected. This results in an automatic "follow the action" relation between the logical terminal/port and the distributed computation.

CONTROLLING MULTIPLE DISTRIBUTED COMPUTATIONS IN A MULTI
CPU ENVIRONMENT FROM A SINGLE PORT

## Technical Field

This invention relates to the management of a distributed communications and processing network of CPUs and terminals, and more particularly to a method and means for controlling multiple computations distributed over the CPU network from a single physical port.

## Background

Hodgkinson et al, USP 4,274,139, "Digital Telecommunications Network Having Improved Data Processing Systems", issued 16 June 1981, discloses a network of communicating processors in which remote function execution may be locally invoked by an originating site sending a message designating a process (task) and parameters to a remote processor. The remote processor queues and executes the designated process as if it were of local origin, and trans-ships the results to the originating site. However, the development and exploitation of distributed computing systems requires facilities for controlling and interacting with distributed computations. This means that operators at ports (terminals) should be able to interact with processes executing at multiple sites without having to operate multiple, physical ports connected to different systems.

Lantz et al, "Virtual Terminal Management in a Multiple Process Environment", 1979 Proceedings of the 7th Symposium on Operating System Principles, pp86-97, depicts a system which converts a single physical terminal into multiple virtual terminals (VT), each of which may be either written to or queried for user input. Furthermore, the system contemplates networked CPU's locally terminating ports in each node, and supporting communication (dialog), rather than exclusive batch processing I/O modes. The management of simultaneous dialoging port activities is by way of an operating system which allows the user sitting in front of a display terminal to view the output of various computations on different areas of the screen. Also provided are facilities permitting the user to rearrange the display, edit, and/or save its contents, and direct input to any of the computations under his control.

Lantz defines a virtual terminal as being owned by a process, and operatively involving three distinctive constructs, that of line, pad, and window. Thus, a "line" is defined as a VT source of input from the process, a "pad" is a disk-based structure for storing and editing VT output, and a window is a mapping of the VT pad onto a display.

Managing the display screen space is central to Lantz's system. In this, the "window" defines what is to be displayed, while a "viewport" defines where on the screen it is to be placed. Thus, a "window" slides over the VT pad and constitutes a potential mapping of pad output to the display, while the "viewport" is the two-dimensional area within the screen for viewing the window contents. Significantly, the display space is shared among multiple independent processes. What is missing is the preservation of time-ordering among concurrently executing processes so necessary to maintaining sequency involved in any external participation or alteration of computations in progress.

It should be appreciated that a distributed computation includes processes executing on one or more CPUs, and normally communicating with each other by sending and receiving messages. In a computation, one process may be designated as the root or initial process. From time to time, the root process selectively may enlist either local or remote processes to perform functions pertinent to the distributed computation by way of sending messages to them. Processes so enlisted may, in turn, enlist still other processes to still further assist in achieving the distributed computation end effect or result.

The control of a multi process distributed computation from a single terminal, or the control of multiple computations from the same terminal, has been approached by Lantz et al by allowing the user to either partition the display surface, i.e., creating multiple viewports, or to time-multiplex the display by switching between different computations such as may be found in concurrent CP/M (an operating system introduced in late 1982 by Digital Research Corporation.  This type of function is described in Ball et al, "RIG, Rochester's Intelligent Gateway: System Overview", IEEE Transactions on Software Engineering, December 1976, pp 321-28.

Other art of interest includes Trufyn, (SA9-82-014), Serial No. 375,432, filed May 6, 1982, "User Controlled Dialog Resource Switching in a Multi-tasking Word Processor".  Trufyn link-list-orders processes concurrently executing against dialog resources.  Upon an internal interrupt, the resources are reassigned in the link-listed order.  Also, Lamport, "Time, Clocks, and the Ordering of Events in a Distributed System", 21 CACM, pp558-65, July 1978, describes several protocols for partially and totally ordering events originating at remote nodes.

## The Invention

It is an object of this invention to devise a method and means permitting a terminal operator at a physical port to dialog with the processes executing among multiple networked CPUs, which processes form part of the same computation.  It is a related object to extend the method to support dialog activity among multiple computations from said port.

It was unexpectedly observed that if remote events, such as write-a-line-of-data (display) functions obtained from executing processes were registered in a buffer in approximate time of occurrence order, then only a linear buffer scan would be needed to ascertain a causal appreciation of events for status or dialog purposes.  Further, if multiple read-a-line-of-data or read/write full screen requests constitute the remote events, then only one is selected while the others must competitively wait.  The selected process is bound to a terminal.  Data is entered and sent to the process and echoed into the buffer.  Once completed, the process resigns and a new one is selected.  This results in an automatic "follow the action" relation between the logical terminal/port and the distributed computation.

This invention contemplates a method for accessing at least one named, and network-located, virtual terminal among a communications and processing network of CPUs and terminals in which processes are concurrently executing. The method steps include: (a) ascertaining the network location of a process requesting access to the named VT; (b) creating a shadow process of the requesting process at said VT, if the requesting process and the VT locations mismatch; (c) upon a requesting process invoking a supervisory write line (display) function, passing said write line function through the shadow process to an output stream buffer (OSB) maintained by the VT in time order fashion; (d) otherwise causing the requesting process to competitively wait for access to the VT with all similarly situated processes; (e) scanning the OSB in order to ascertain the progression of the requesting processes; and (f) selecting at least one such similarly situated process to interact with the VT.

When employing the method of this invention, an operator at a port is able to dialog with distributed computations by observing output indications from the concurrently executing processes of the computation and issuing input commands to the computations. The operator can issue commands to control the association of a port (terminal) with particular processes and computations. Such commands allow the operator to (1) initiate multiple, independent distributed computations, (2) control the computations output currently displayed at the port, (3) selectively interact with any compuations, (4) selectively interact with any individual local or remote processes of the current distributed computation, and (5) logically pass the port to a remote system and continue as though the terminal were connected to that remote node.

## Brief Description of the Drawing

FIG. 1 illustrates networked CPUs, including remote tasking facilities therein;

FIG. 2 depicts a flow chart representation of the access method for named VT locations;

FIG. 3 illustrates a distributed processing system, while FIG. 4 sets out a terminal (port) connection absent the distributed terminal management of the invention;

FIG. 5, 6 and 7 illustrate views of the processes and terminals involved in distributed computation and control according to the invention;

FIG. 8 exhibits DTM with pass-through;

FIG. 9 exhibits the inventive method and its utilization of an output serial buffer for concurrently executing the process status representation.

<div align="center">

Description of the Preferred Embodiment
and Its Industrial Applicability

</div>

Preliminary Considerations

Since the invention is executable upon networking CPUs a facilitating environment is described in Hodgkinson USP 4,274,139, and incorporated herein by reference. It should be recalled that broadly the operating systems of CPUs, such as IBM OS/360 and OS/MVS were batch-oriented systems having work units in the forms of jobs emphasizing logical partitions and job steps. In this regard, MVS is described in IBM publication "OS/VS2 MVS Overview, Release 3.8" (GC28-0984). Running under OS/MVS as a "job" and forming part of the resident operating system is the Customer Information Control System (CICS) whose present-day version is CICS/VS, discussed in IBM "CICS/VS Version I, Release V, System/Application Design Guide (SC33-0068). CICS broadly relates to transaction management of multiple terminals. Here transactions are considered as bursty conversations between terminals and a database in which dispatching efficiency of the operating system is emphasized.

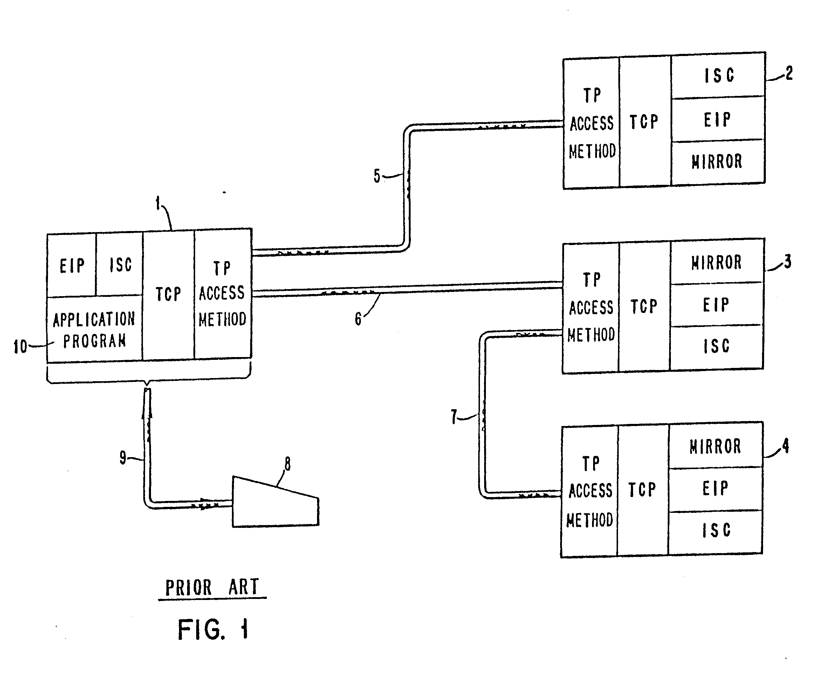

In the subsequent description, it shall be assumed that each CPU node in the network has the CICS/VS control system, and further, that communications between CPUs is governed by the Virtual Telecommunications Access Method described in "Advanced Communication Function for VTAM Version II Programming", (SC27-0611), according to the IBM Systems Network Architecture, as described in "Systems Network Architecture Introduction" (GA27-3116). These all being IBM publications. A networked CPU arrangement executing these facilities known in the prior art is shown in FIG. 1.

For ease of reference, the protocols and facilities permitting a dialog relation between multiple distributed computations from a single physical port shall be designated as a distributed terminal management (DTM) facility. Further, the terms "virtual" and "logical" are synonyms, as are the terms "task" and "process".

Attributes of DTM

It is a specific object of DTM to control a distributed system where activity proceeds concurrently in multiple processes on multiple CPUs, and to permit any process to interact with one or more terminal operators at any time in the execution sequence of that process. It has been found that DTM must make it possible for each process to behave just as though that process "owned" one or more named terminals. More particularly, DTM assumes that any process can (1) read a line from a named terminal, (2) write a line to a named terminal, (3) read a screenful of formatted data from a named terminal, and (4) write a screenful of formatted data to a named terminal.

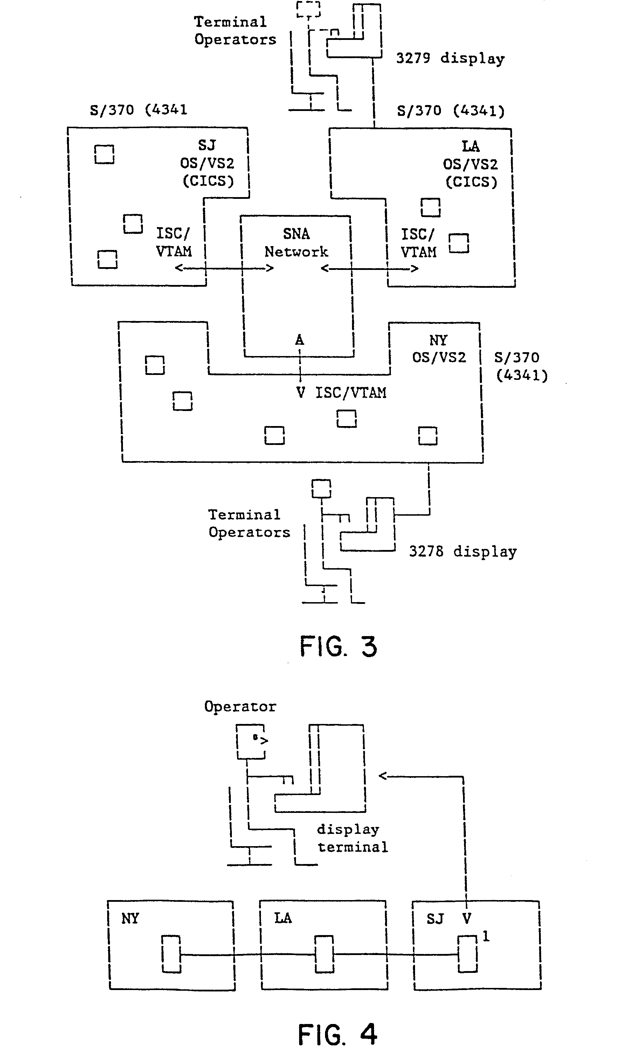

Referring now to FIG. 3, there is shown a typical distributed process system including CPUs, a network manager, processes, terminals, and dialog interfaces at the terminals (ports) for operators. Each node includes an IBM System 370 CPU Model 4341, a communicating channel supported by an IBM 3705 control unit, with multiple IBM 3270-type display terminals locally attached to each CPU. Each CPU node is supported by the following specific supervisory systems: IBM OS/VS2, CICS/VS, ACF/VTAM and CICS/OCS.

ACF/VTAM supports all network management services to facilitate the connection and transmission of data between System Network Architecture (SNA) supported devices.  The ISC (inter-systems communication facilities) in CICS provides services to support a distributed computation involving multiple processes running in multiple CICS systems.  The distributed processes communicate via the SNA network, application-to-application communications protocol SNA Logical Unit 6.  With the invention to be described, a CICS transaction code entered at a terminal creates a distributed computation involving multiple CICS processes in multiple CICS systems.

The following paragraphs are directed to DTM architecture to be followed by a description of a preferred embodiment.

## The DTM Dialog Interface

It is well appreciated that an operator at a physical port or terminal controls and dialogs with distributed computations by observing output from the processes of the computations, and by issuing input commands to the computations.  It is desired that the operator also issue DTM commands to control the association of the port (terminal) with particular processes or computations.  The DTM operator commands permit an operator to (1) initiate multiple, independent, distributed computations, (2) control the computation output currently displayed on the terminal, (3) selectively interact with any computation, (4) selectively interact with individual local or remote processes of the current distributed computation, and (5) logically pass the physical terminal to a remote system and continue as though the terminal were connected to that system. It is necessary that DTM operator commands be distinguished from other terminal input by prefixing them with an appropriate escape character such as "%"; such a usage permits the operator to command the terminal facility at any time without disturbing computations currently interacting with said terminal.  Terminal input which is not prefixed with the escape character is actionable input that is passed to the distributed computation.

In DTM, an operator can initiate a new computation or return
attention to an existing computation by typing "%CONNECT [computation
name]", where [computation name] is the operator-selected name of either a
new or existing computation.  If the named computation does not exist,
then %CONNECT creates a named computation and a named logical (virtual)
terminal to be associated with said computation.  If the named computation
already exists, the physical terminal becomes bound to the logical
terminal of that computation.  The %CONNECT command allows the terminal
operator to switch the terminal from one computation to another.

Associated with each logical terminal is a sequential output stream
buffer (OSB).  This buffer contains annotated, time ordered output lines
from the processes of the computation associated with the logical
(virtual) terminal.  The OSB is a finite circular buffer.  The terminal
operator can display any portion of the OSB by scrolling forwards or
backwards in the output stream.  This is accomplished by entering an
appropriate DTM command such as %UP and %DOWN or stroking a predetermined
program function key.  Each executing process output display line is
labeled with process and system identifications.  Significantly, the
ordering of the output lines in the OSB may be controlled by a distributed
clock as described by Lamport, "Time, Clocks, and the Ordering of Events
in a Distributed System", 21 CACM, pp558-565, July 1978.  The ordering of
OSB output lines can also be effectuated by the time of arrival at the
buffer.  Labeling and ordering the output stream substantially assists
estimating the progress and interactions of cooperating processes at one
or more nodes.

When one or more processes of a computation require input from the
logical terminal associated with its computation, said processes must
compete for the logical terminal.  While sequential output from multiple
processes can be automatically merged for display, it has been found that
requesting inputs from the terminal from competing processing must be
time-multiplexed.  Selection can be made by the terminal operator among
the processes desiring input by using the DTM %SWITCH command.  Of course,
the output display indicates which processes desire input from the terminal and which process is currently selected for input. The %SWITCH
command allows the operator to cycle through the processes competing for
input. When the terminal operator produces actionable input, the input is
both passed to the currently selected process, and also appended to the
output stream to produce an intelligible record of interactions with the
computation. If only one process of the computation is competing for the
logical terminal at any given time, the logical terminal automatically
services that process. Thus, if the distributed computation is organized
using remote procedure call interaction between the processes, only one
process at a time requests input, and the logical terminal automatically
follows the action from one process to another. The logical terminal
"follows" the computation from process to process without requiring the
operator use of the DTM %SWITCH command.

When developing distributed computations, it is often necessary to
issue commands to specific sites at remote locations within the network.
To support this requirement without requiring physical terminal
connections to multiple systems, DTM permits a terminal operator to
logically attach the physical terminal to a remote system, and to initiate
and control computations as though the terminal were directly connected to
the remote system. This "pass-through" facility is used to bring up
subsystems at remote sites. This is manifested in the DTM %PASSTHRU
[system ID] command. This command logically moves the physical terminal
to the site indicated by the system ID where the user can %CONNECT to new
or existing computations at that site. This permits multiple levels of
pass-through. The last pass-through connection is syntactically
terminated by a DTM %QUIT command.

The DTM/Process Interface

In this section, the interface between executing processes and the
logical terminal associated with the named computation will be described.
Input and output at a port is initiated by a call to the DTM service.
These calls replace the usual system calls for terminal access, but have
the same calling interface. There are calls to write a line to the
terminal, read a line from the terminal, full-function calls to read and write full screens, calls to create and destroy logical terminals, and a call to relinquish the logical terminal.

The write line call takes the line to be written as a parameter, and appends the line to the OSB of the logical terminal of the computation of the process making the call. The OSB also contains the process and site identifications of the process writing the line. The output line is displayed on a physical terminal where the operator can "%CONNECT" a physical terminal to the logical terminal of the computation, and display the portion of the output stream which contains the line.

To read from the logical terminal keyboard, a process invokes the DTM read line procedure providing a buffer for the return character stream. Normally, a process would first write a line to indicate that input is desired and provide a clue as to the nature of the input. When requesting input, the requesting process is delayed until the terminal operator has %CONNECTED to the logical terminal of the process. However, if multiple processes are requesting input, then it is also necessary to %SWITCH to the requesting process. When the terminal operator has responded to the request for input, the input line is returned to the process which called for terminal input, and that process is allowed to continue executing.

Once a process is selected by a logical terminal, it remains selected until either the terminal operator %SWITCHES to another process within the computation, or until the process explicitly relinquishes the selection. Relinquishment is invoked simply by a call to the DTM Relinquish Selection procedure.

Implementation Principles

Associated with each physical terminal is a Terminal Control task (TCT) which is an independently dispatched process responsible for managing the physical terminal, and also for interpreting the DTM % commands. The TCT is the entity which displays the OSB of the connected logical terminal and manipulates terminal input. Further, the TCT routes line and full function requests to the proper process of the connected logical terminal, and arbitrates among multiple processes competing for the logical terminal.

Operatively, the TCT can create logical terminals, or connect to existing logical terminals. When an operator invokes a %CONNECT to a new logical terminal, the TCT creates a new computation running at the command level of the system, and passes the name of the logical terminal to the new computation.

The logical terminal is identified by its name. The name includes the identity of the site which contains the logical terminal data structure and the name of the logical terminal at that site. There is an implicit logical terminal associated with every distributed computation. Whenever a process invokes a DTM function, DTM must identify the logical terminal for which service is requested. If no explicit logical terminal is identified by the calling process, then by default the implicit terminal is used. An implicit terminal is associated with every new computation created by the %CONNECT [computation name] command. By convention, this implicit terminal has the same name as the computation, and is located at the site of the TCT which processed the %CONNECT command. The name of the implicit logical terminal is passed to each new process which joins the computation. This name is stored in process local, subsystem specific, static storage. When an executing process calls DTM for service and provides no explicit logical terminal name, then DTM uses the stored implicit terminal name.

Processes may access, create and destroy logical terminals other than the one implicitly associated with the computation. A process wishing to create (destroy) a logical terminal, calls the DTM create (destroy) VT service and supplies the logical terminal name. DTM preserves the uniqueness of all VT names at the site. The means by which terminal operators become aware of the existence of VTs created in this way is dependent on the application environment.

A logical terminal is represented by a global data structure which is accessible to the DTM used by all processes running at the site of the logical terminal. The logical terminal data structure includes the terminal name, the OSB, and a list of processes using the logical terminal. If a process calling DTM service is local to its logical terminal, the logical terminal (data structure) is located by searching in DTM global storage. Having located the logical terminal, DTM supplements OSB information displayed on a connected physical terminal. If a process requests line input or full function, DTM must add the requesting process to the competing process list of the logical terminal and raise a logical terminal select flag in its entry of the process list. When a TCT is first %CONNECTED to the logical terminal, it chooses from processes with the select flag "on" and wakes up the chosen process when line input is ready or full function control has been granted.

If the DTM access request occurs on a process which is not local to the site of the logical terminal, supplementary protocols are invoked. In this circumstance, DTM at the requesting site establishes communications with a "shadow" process at the site of the logical terminal. The shadow process acts on behalf of the requesting process in order to update the logical terminal OSB, and to compete for logical terminal selection. Evaluation of the logical terminal name indicates whether the logical terminal is either local or remote. If the logical terminal is remote, then the name will specify the site at which a shadow process must be established. Consequently, output data and full function command streams may then be sent to the shadow process, and the shadow process returns input data and full function inputs when the TCT passes them to the shadow process.

In order to support the %PASSTHRU function, the TCT establishes communications with the target site and creates a "shadow" TCT at that site. The local TCT then acts as a slave to the shadow TCT and passes input and display output under the direct control of the shadow TCT. If an operator at a port initiates an additional %PASSTHRU, the shadow TCT becomes a transparent link in the communication between the new end point

0114357

TCT and the TCT at the site of the physical terminal. The end point TCT provides the same services as previously described for local TCTs. That is, the end point TCT may create new computations and associated logical terminals. It may connect to and browse OSBs for existing logical terminals which are located at the end point site, etc.

When viewing the OSB for a particular logical terminal, the first line of the display describes the status of the pass-through activity. That is, it identifies the name of the site to which the physical terminal is connected, it identifies the current number of pass-through events, that is, the number of TCTs, and it identifies the end point TCT site.

### The Embodiment

Referring now to FIG. 3, there is shown an illustration of a distributed processing system. The small boxes represent CICS processes which may communicate with one another using CICS intersystem communication support. This figure presupposes a three node CPU network sited respectively at San Jose (SJ), Los Angeles (LA), and New York (NY). Each node supports an IBM System/370 model 4341 CPU. Terminal operators at LA and NY are coupled via Terminal Keyboard Display stations of type IBM 3278 and IBM 3279. Each CPU communicates over the SNA network with the ISC/VTAM protocols.

It should be recognized that terminals or ports are used by people to communicate with executing processes. In distributed processing systems, it is common practice for a computation to be decomposed such that it is executed on multiple processes and at multiple sites. Significantly, the first process is often the only process permitted to interact with a terminal. This is exemplified by the configuration shown in FIG. 4. Since all terminal traffic must flow to the single process which owns the terminal, the movement of terminal data by any other process is substantially prohibited.

FIG. 4 depicts a terminal connection without DTM. The small boxes represent processes and the paths between the boxes represent a communication link therebetween. The process denoted with a "1" was the first process created by the terminal operator. This first process "owns" the terminal and is located at the San Jose site. Neither the LA nor NY sited processes has a convenient access path to perform terminal I/O at SJ.

As may be recalled, each logical (virtual) terminal (VT) is associated with an output stream buffer. As may further be recalled from the general discussion of the DTM architecture, the OSB associated with each logical terminal contains a time ordered collection of output lines which correspond to all DTM write line requests for the particular terminal (VT). To ensure that lines of data are properly ordered, DTM associates a distributed logical timestamp (clock value) with each output line. This timestamp is set at the site where a process issues the DTM write line request. These output lines are maintained in ascending timestamp order in the OSB. Thus, when the line is displayed, output appears in proper order. Further, the OSB may be in virtual memory or it may even be paged off a disk as required.

At any given time a TCT may be connected to one or more named logical terminals (VT). The connection to a VT is in one of two modes. These are either read/only or read/write. Further, a logical terminal may be connected to any number of TCTs in the read only mode. This means that an unlimited number of terminal operators may see what is happening on a given logical terminal. However, a logical terminal may connect to only one TCT in the read/write mode. The import of this is that only one terminal operator may communicate by way of a given logical terminal at one time. At any given time, only one of the processes using a given logical terminal may communicate with the VT's terminal operator. This process is designated as the "spokesman process".

When command lines are entered at the terminal, either the TCT or the spokesman process accesses the command line. The TCT receives and acts on any command prefixed with the designated escape character, such as %. If the command is not so prefixed, then the terminal input line is passed to the spokesman process. If the TCT is not connected to a logical terminal, or if the connective logical terminal currently has no spokesman process, then the command line is ignored and an error message is displayed.

In FIG. 4 there is shown a distributed terminal system having a port located at SJ. This operator can access a TCT resident in his local CPU. This TCT is connected to a logical terminal T. The operator may thus interact with any process which wishes to be read from T. In this configuration, all processes desire to read from the terminal. The operator may choose to "speak" to any one of them by typing an appropriate % command (%SWITCH). Significantly, the processes are marked with letters describing their states, R(x) designating a process desiring to read from terminal X while S is the spokesman process. This is sited at NY. Since the spokesman process is located at NY, terminal input is directed to the NY process.

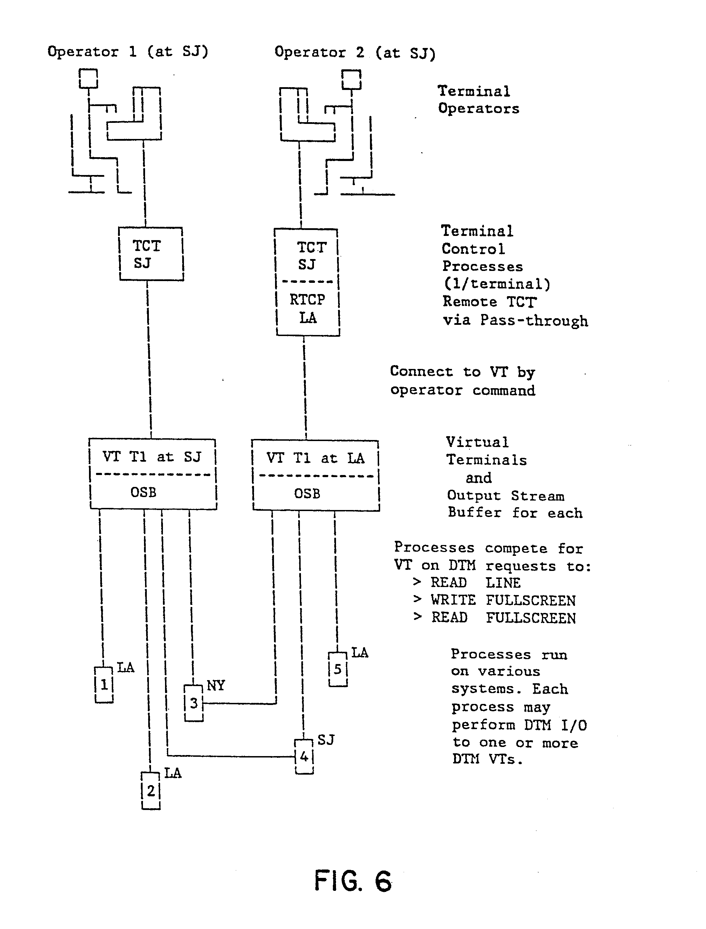

Referring now to FIG. 6, there is shown a configuration of DTM processes and terminals in which processes 1, 2, 3, and 4 are executing logical terminal I/O on VT T1 at SJ. Processes 3, 4, and 5 are all performing logical terminal I/O on terminal T1 at LA. Terminal operator 1 at SJ is using logical terminal T1 at SJ, while terminal operator 2 at SJ is using logical terminal T1 at LA.

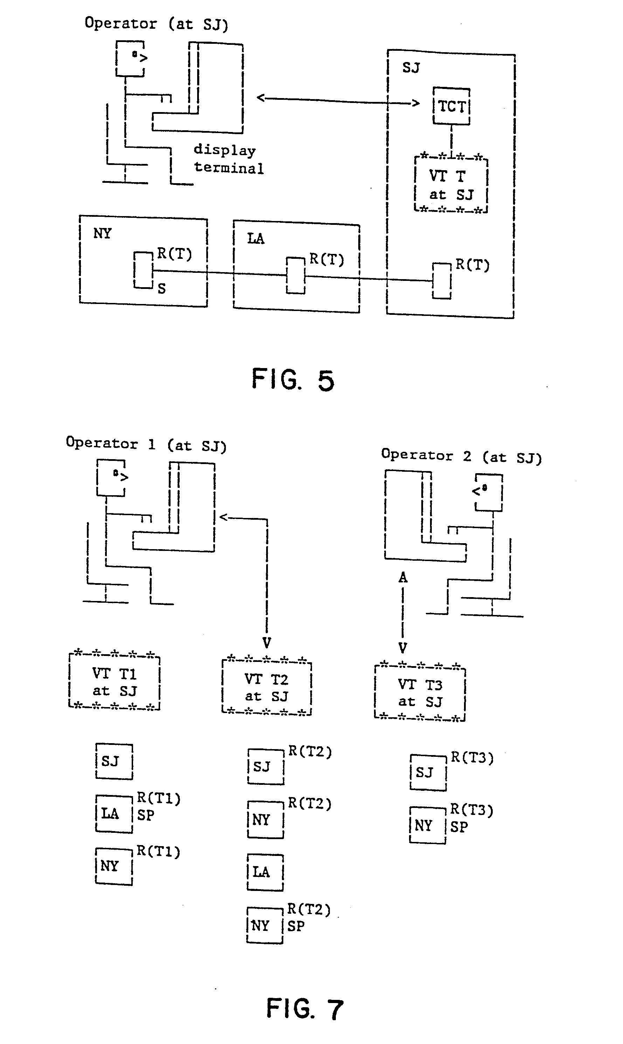

The FIG. 5 configuration shows how DTM makes it possible to flexibly associate terminals with processes. Operators communicate with TCTs to obtain terminal presentation services. Operators also communicate with TCTs to request that the terminals be connected with one or more logical terminals, i.e., VTs. Each VT may be used by one or more processes running on one or more systems, thus the operator may communicate with a wide variety of processes.

Write Line and Read Line Requests

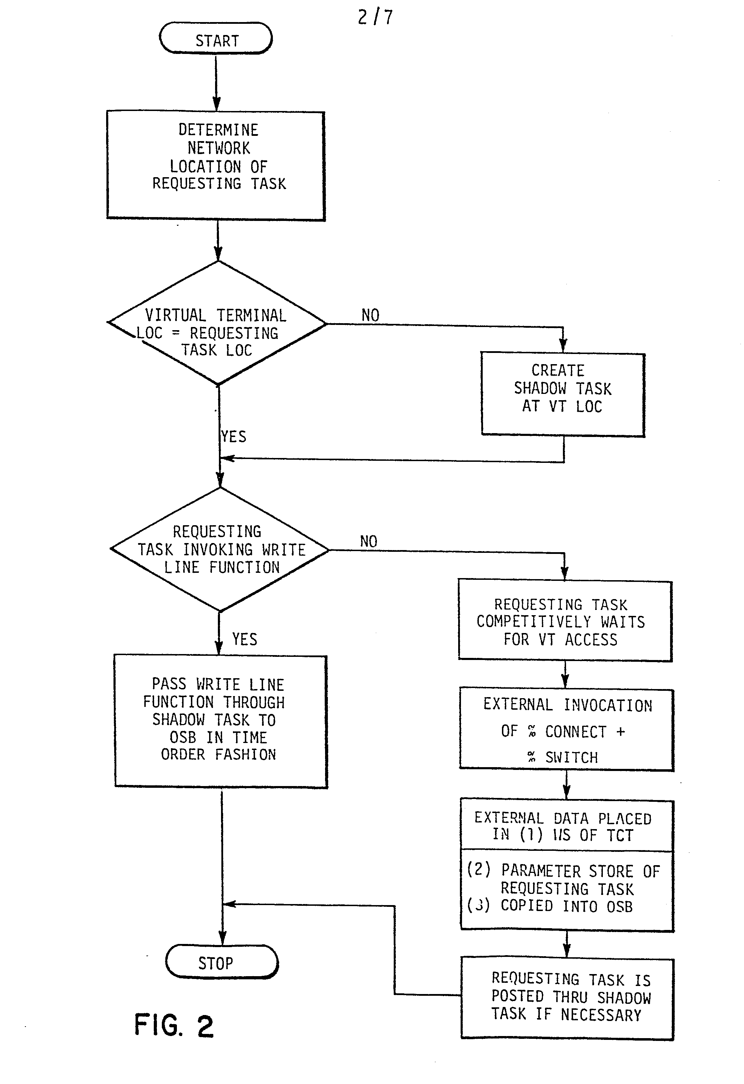

Referring now to FIG. 2, there is shown the interactive method of this invention.

When a process intends to output a text line (data string of n characters) to a logical terminal, it invokes the DTM write line routine and passes to it the name of the logical terminal and the address of the data line to be outputed. These lines ultimately are written into the OSB bound to the named logical terminal. The TCT subsequently references this data and causes it to appear on the physical terminal responsive to operator requests. Associated with each line is a time stamped (logical clock) indicative of the output request occurrence, the name of the process creating the output line, the name of the system in which this process is or was executing, and the computation name. If the virtual or logical terminal location is the same as that of the requesting task location, then the data line is simply written into the OSB for that logical terminal. If, however, the write line or read line request is made by a process which is not in the same system as the logical terminal, then additional protocols are needed.

It should be recalled that whenever a process creates another process, it is necessary to have the target process know the name and location of the logical terminal which both processes are to use when communicating with "the" terminal operator. When a remote process calls a DTM write line procedure, it creates a shadow task at the logical terminal, and manages a virtual circuit between the remote process and the shadow process. Now using the logical terminal name passed to it by the remote process, the shadow process joins the logical terminal. Having created a shadow process, the DTM write line procedure sends the fully annotated line to the shadow process. Upon receiving this line, the shadow process calls the DTM write line routine and passes to it the supplied annotated line. In turn, the DTM places the annotated line into the OSB for the associated logical terminal. However, the annotations are those created at the remote system. Two additional aspects should be noted: first, responses flow back to the remote process which may then

17    **0114357**

continue its execution, and second, the shadow process remains executable while waiting to handle more DTM requests from the remote process that created it. Shadow tasks end when the distributed computation ends.

It should be further observed in FIG. 2 that if the requesting task did not invoke a write line function, then a branch whose first step involves competitively waiting for logical terminal access is invoked.

## Read Line Request Management

When a process wants to read a line of text from a logical terminal, it calls the DTM read line routine and passes to the DTM a memory address for receiving the data and the name of the logical terminal from which to read. When several processes use the same logical terminal, they compete for the right to be spokesman, as previously described. Whenever a process makes a DTM read line request, it attempts to become the spokesman. Where a remote process makes a read line request, then a shadow process at the local logical terminal location attempts to become the spokesman.

Unlike a DTM write line request which causes a line to be placed into the OSB, a DTM read line request requires that an input line be available before the process is permitted to continue. To avoid deadlock among processes which are contending, the DTM requires that a spokesman process must resign prior to waiting for any other process which may want to use the logical terminal. At the time of resigation, DTM determines if there are other processes which are currently competing for the terminal, then DTM selects one of them to become the new spokesman. That process receives subsequent input lines from the TCT. If no process is competing for use of the VT, then the computation continues without a spokesman until one of the processes wants to become the spokesman. In addition to deadlock avoidance, the resignation rule allows the terminal to follow the action. As the locus of control moves among multiple processes which use the same logical terminal, the terminal tends to move where the action is. This ability to follow the action provides a significant functional advantage over current systems.  The user is able to "think of" the
distributed computation as though it was a single process application.

In order to operate the terminal in full function mode, a program
calls the full function DTM procedure, passing a full function command
stream for the terminal.  Full function mode supports a variety of device
characteristics and the full function command stream is mapped by DTM to
the command stream needed to drive the physical terminal.  As in the case
of line input, full function terminal calls must compete with other
processes of the computation for access to the terminal.  This allows a
program to conduct a dialog with the terminal operator by executing
multiple full function reads and writes to the terminal without being
interrupted by other processes of the computation.

Referring again to FIG. 2, a non-write line request proceeds after
external invocation of the %CONNECT and %SWITCH commands.  Data entering
from the port is placed either in the work space of the associated TCT,
into the parameter store of the requesting task, or copied into the OSB.
After this, the requesting task is posted through its shadow task if
necessary.  This completes the cycle of the method of this invention.

Passthru

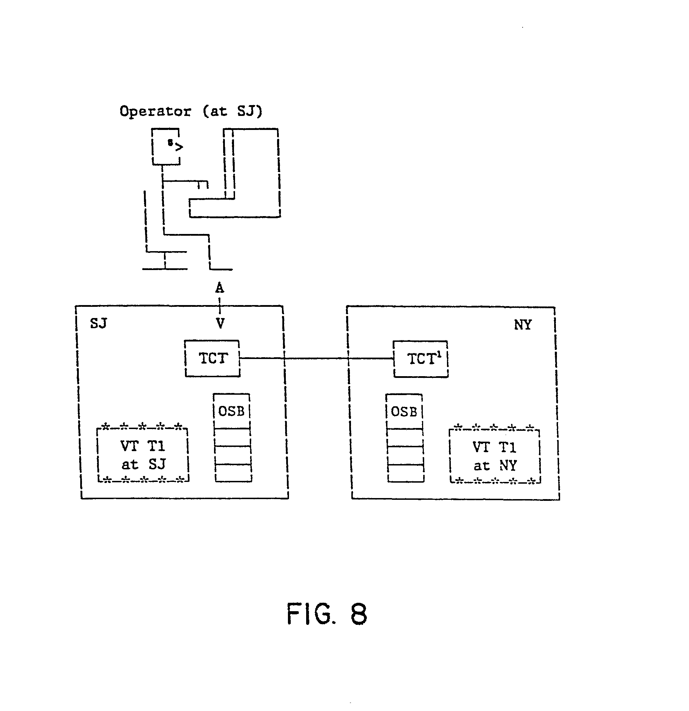

Referring now to FIG. 8, there is shown a configuration in which the
operator at SJ instructs the TCT to logically relocate to NY.  A remote
TCT is then created at NY.  The TCT at SJ passes all terminal I/O to the
TCT at NY.  Further, the operator instructs the TCT at NY to connect to
logical terminal TT1.  After this, a dialogue with T1's spokesman process
begins.  Since the terminal appears to be located at NY, the operator may
connect to any logical terminal at NY.

Read/Write Representations Integrated at the Logical
Terminal

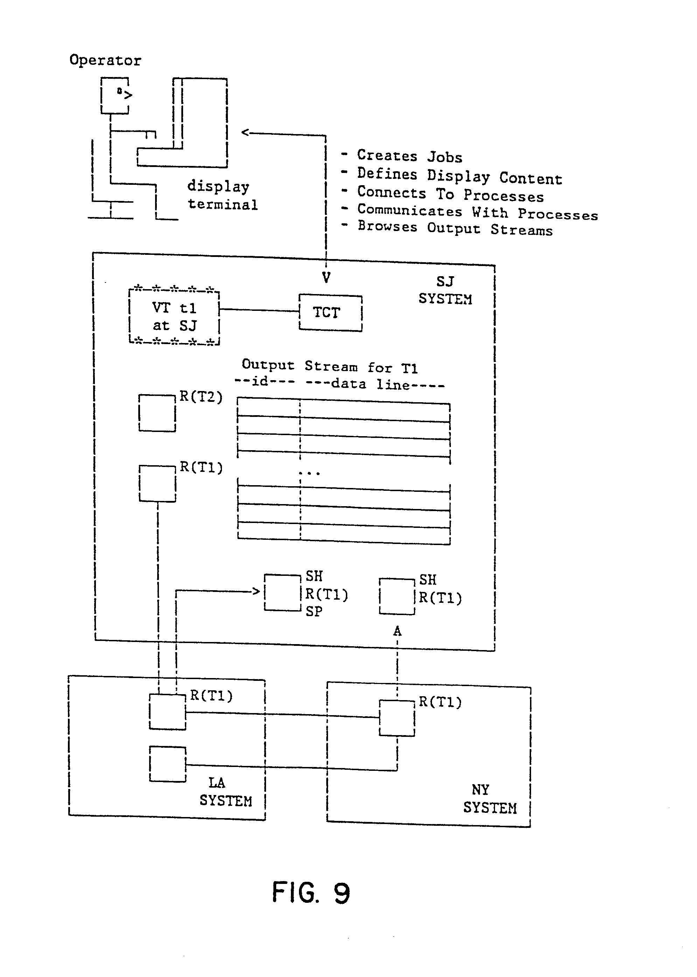

Referring now to FIG. 9, there is shown a global DTM involvement.
Here, the operator, at a physical port, browses the output stream which
contains output lines for logical terminal TT1 by simply using the interface equivalents of program function keys. Since the TCT is connected to TT1, and since a process at LA may be designated as spokesman, all non-TCT or % commands are passed to that process at LA by way of its shadow process in SJ. Since processes at both SJ and NY want to read from TT1, the operator may enter a %SWITCH command to quickly connect to either of these processes. It also appears that a process in SJ wants to read from VTT2. Thus the operator could connect by way of a %CONNECT command to T2 for awhile and then %CONNECT to TT1 again.

In FIG. 9, the small boxes represent processes, and the paths connecting the processes represent communications therebetween. The processes are marked with letters which describe their states. Thus, R indicates a process wanting to read from the terminal, SP designates the spokesman process and SH designates a shadow process.

It is then understood that the particular embodiments of the invention described above and shown in the drawings are really illustrative and not restrictive of the broad invention.

CLAIMS

1.   A method for controlling multiple computations distributed over a communicating network of CPUs and their locally accessing terminals by operator entered codewords at a single physical port, each computation including an initial process selectively enlisting other local or remote processes to perform functions pertinent to the computation by way of sending messages to them, comprising the steps of:

  creating a first and second processing object in the form of a named computation bound to a named logical terminal and to a predetermined physical port responsive to an operator-entered first codeword (%CONNECT);

  connecting the named logical terminal and its correlative physical port from one computation to another, if rooted at said terminal, responsive to an operator-entered first transaction code whose argument is the computation name (%CONNECT [computation name]);

  link list ordering multiple processes of each computation with respect to the dialog functions of the named logical terminal; and

  switching the named logical terminal and its correlative physical port among the executing processes of the same named computation in link-list order responsive to an operator-entered second codeword (%SWITCH).

2.   In a distributed communications and processing network of CPUs and their locally accessing terminals, a method for accessing at least one named and network located logical terminal among processes concurrently executing on said CPUs, comprising the steps of:

  (a)   ascertaining the network location of a process requesting access to a named logical terminal;

(b)  creating a shadow process of the requesting process at said
     named logical terminal if the network locations of the
     requesting process and the logical terminals mismatch;

(c)  upon a requesting process, invoking a supervisory  write line
     (display) function, passing said write line function through the
     shadow process to a output stream buffer (OSB) maintained by the
     logical terminal in approximate time of occurrence order;

(d)  otherwise causing the requesting process to competitively wait
     for access to the logical terminal with all similarly situated
     processes;

(e)  scanning the OSB to ascertain the progression of the requesting
     processes; and

(f)  selecting at least one such similarly situated process to
     interact with the logical terminal.

3.   A method according to claim 2, wherein the passing of the write line
function into the OSB in approximate time of occurrence order includes the
steps of:

     ensuring that each CPU increments its local clock between every pair
     of local consecutive events, said events including the receipt of
     messages from remote processes;

     time stamping the write line functions with clock value t1 at a
     remote sending CPU site s1 at the time the function requested; and

     setting the clock value at the receiving CPU site s2 equal to the
     maximum of either t1 or t2 when the message is received at the named
     logical terminal, where t2 is the previous value of the local clock
     at the CPU to which the logical terminal is presently bound.

22    0114357

4.    A method according to claim 3, wherein the write line functions are maintained in ascending time stamp order within the OSB.

5.    A method according to claim 2, wherein the approximate time of occurrence order is treated as the order of arrival at the logical terminal.

6.    A method according to claim 2, wherein the competitive waiting processes include processes requesting read line, or read/write full screen functions, said method including the further steps of:

selecting one of multiple read line request tasks and coupling it therethrough to the logical terminal; entering data to said selected process and copying it into the buffer; causing the process to resign, and selecting another process requesting a read line function, whereby said logical terminal follows the action.

7.    A method for controlling a computation distributed over a communicating network of CPUs and their locally accessing terminals from a single physical port, each computation including an initial process selectively enlisting other local or remote processes to perform a function pertinent to the computation by way of sending messages to them, comprising the steps of:

creating a first and second processing object in the form of a named computation bound to a named logical terminal and physical port;

ascertaining the network location of a process requesting access to the named logical terminal;

creating a shadow process of the requesting process at said named logical terminal, if the network locations of the requesting process and the logical terminals mismatch;

upon a requesting process invoking a supervisory write line (display) function, passing said write line function through the shadow process to an output stream buffer (OSB) maintained by the named logical terminal in approximate time of occurrence order;

otherwise causing the requesting process to competitively wait for access to the named logical terminal with all similarly situated processes;

scanning the OSB to ascertain the progression of the requesting processes; and

selecting at least one such similarly situated process to interact with the named logical terminal, such interaction, if the process is other than a write line function, includes the steps of passing data through the logical terminal to the requesting process and copying the data into the OSB, and posting the requesting process through the shadow process if necessary.

8.    A method according to claim 1, said method including the further steps of binding a physical terminal to a remote logical terminal responsive to an operator-entered third codeword (%PASSTHRU [system id]); and connecting the physical terminal through an associated named logical terminal at that remote site to new or existing computations at said remote site.

PRIOR ART

FIG. 1

FIG. 2

**FIG. 3**

**FIG. 4**

4/7

Operator (at SJ)

display
terminal

SJ

TCT

VT T
at SJ

NY

R(T)

S

LA

R(T)

R(T)

# FIG. 5

Operator 1 (at SJ)

Operator 2 (at SJ)

A

V

V

V

VT T1
at SJ

VT T2
at SJ

VT T3
at SJ

SJ

SJ

R(T2)

SJ

R(T3)

LA

R(T1)
SP

NY

R(T2)

NY

R(T3)
SP

NY

R(T1)

LA

NY

R(T2)
SP

# FIG. 7

Operator 1 (at SJ)        Operator 2 (at SJ)

Terminal
Operators

```
┌─────────┐              ┌─────────┐
│  TCT    │              │  TCT    │
│  SJ     │              │  SJ     │
└─────────┘              ├─────────┤
                         │  RTCP   │
                         │  LA     │
                         └─────────┘
```

Terminal
Control
Processes
(1/terminal)
Remote TCT
via Pass-through

Connect to VT by
operator command

```
┌─────────────┐          ┌─────────────┐
│ VT T1 at SJ │          │ VT T1 at LA │
├─────────────┤          ├─────────────┤
│    OSB      │          │    OSB      │
└─────────────┘          └─────────────┘
```

Virtual
Terminals
   and
Output Stream
Buffer for each

Processes compete for
VT on DTM requests to:
  > READ   LINE
  > WRITE  FULLSCREEN
  > READ   FULLSCREEN

Processes run
on various
systems. Each
process may
perform DTM I/O
to one or more
DTM VTs.

FIG. 6

Operator (at SJ)

A
V

SJ

TCT — TCT¹  NY

OSB
OSB

VT T1
at SJ

VT T1
at NY

FIG. 8

0114357

Operator

display
terminal

- Creates Jobs
- Defines Display Content
- Connects To Processes
- Communicates With Processes
- Browses Output Streams

SJ
SYSTEM

VT t1
at SJ

TCT

Output Stream for T1
--id--- ---data line----

R(T2)

R(T1)

...

SH
R(T1)
SP

SH
R(T1)

A

R(T1)

R(T1)

LA
SYSTEM

NY
SYSTEM

FIG. 9